# EUROPÄISCHE PATENTSCHRIFT

(11) **EP 0 773 117 B1**
(45) Veröffentlichungstag und Bekanntmachung des Hinweises auf die Patenterteilung: **21.08.2002**
(21) Anmeldenummer: 95117679.1
(22) Anmeldetag: 09.11.1995
(51) Int. Cl.: B60C 11/04

(54) **Drehrichtungsungebundenes Laufstreifenprofil eines Fahrzeugreifens mit Blockprofilstruktur**
Non-directional tread profile for a vehicle tyre with block structure
Profil de bande de roulement non-directionnel pour un bandage pneumatique avec une structure de profil contenant des blocs

(43) Veröffentlichungstag der Anmeldung: 14.05.1997
(73) Patentinhaber: Uniroyal Englebert Reifen GmbH, D-52068 Aachen (DE)
(72) Erfinder: Vögler, Hans-Jürgen, D-52134 Herzogenrath (DE); Baumhöfer, Hans, D-52080 Aachen (DE); Poqué, Dionysius, D-52076 Aachen (DE)
(74) Vertreter: Schneider, Egon

(56) Entgegenhaltungen:
- EP-A- 0 325 905
- EP-A- 0 547 019
- EP-A- 0 635 382
- DE-U- 8 628 836
- DE-U- 9 016 455
- FR-A- 2 673 578

## Beschreibung

Die Erfindung betrifft ein drehrichtungsungebundenes Laufstreifenprofil eines Fahrzeugreifens mit Blockprofilstruktur gemäß den Merkmalen des Oberbegriffs von Anspruch 1.

Ein derartiges Laufstreifenprofil ist bereits aus dem deutschen Geschmacksmuster M 94-04270.5 bekannt. Durch die kompakte Ausbildung des zentralen Laufstreifenbereichs, bestehend aus zentraler Umfangsrippe und zwei zentralen Umfangsbändern mit schmal ausgebildeten, die Umfangsrippe und die zentralen Umfangsbänder trennenden Umfangsrillen und mit wasserabführenden parallelen stetig steigenden Querrillen, ermöglicht der zentrale Laufstreifenbereich auch mit seinem niederen Negativanteil bzw. hohen Positivanteil, d. h. mit seinem hohen Flächenanteil mit erhabenen Profilelementen, aufgrund der in axialer Richtung auf die Fahrbahn ausgeübten hohen Druckgradienten eine gute Wasserabfuhr axial zur Seite aus dem zentralen Bereich in die breiten Umfangsrillen hin.Die über die gesamte Breite der Schulterumfangbänder ausgebildeten stetig ausgebildeten Querrillen ermöglichen eine optimale Wasserabfuhr seitlich noch aus der Aufstandsfläche nach außen und aufgrund der gegenüber den Querrillen der benachbarten zentralen Umfangsbänder unstetig invertierten umfangsgerichteten Komponente dieser Querrillen ebenso wie der geringe Negativanteil im zentralen Laufflächenbereich ein geringes Schallaufkommen. Die Querrillen ermöglichen außerdem gute Traktionseigenschaften für nasse Fahrbahnen bei Sommerreifen.

Ein derartiger Reifen weist demnach bereits optimierte Aquaplaningeigenschaften, gute Abrieb- und Handlingeigenschaften auf. Aufgrund seiner kompakten Ausbildung des zentralen Laufstreifens ist er darüberhinaus relativ unempfindlich gegenüber den zur Wasserabfuhr in Fahrbahnen im Abstand von ca. 1 Zoll angeordneten Längsrillen, wie sie in einigen Ländern anzutreffen sind.

Die kompakte Anordnung verhindert eine ständig wechselnde Erregung der Umfangskanten des Reifenprofils im zentralen Bereich beim Befahren solcher Straßen.

Aufgrund der gegenläufigen Steigung der Querrillen von Schulterumfangsreihen und zentralen Umfangsreihen, sowie durch die relativ steife Ausbildung der Umfangsrippe unterliegen die Profilelemente der zentralen Umfangsreihen gegenüber den benachbarten Profilelementen der Schulterumfangsreihen stark unterschiedlich gerichteten Schubkräften, wobei noch verstärkt durch die unmittelbar an die Umfangsreihen angrenzende, nur durch eine schmale Umfangsrille von ihnen getrennte steife Umfangsrippe die Profilelemente der zentralen Umfangsreihen beim Auftreffen auf die Straße sowie beim Aufheben des Berührkontakts von der Straße starken Verbiegungen und Verwindungen unterliegt, so daß diese Profilelemente bei einem derartigen Reifen noch unerwünscht hohen Abrieb aufweisen und hohen Vibrationen unterliegen und somit immer noch in unerwünscht hohem Maße eine hohe Geräuschentwicklung verursachen. Ebenso ist der sogenannte Sägezahneffekt gerade bei diesen Profilelementen bei einem solchen Reifen noch stark ausgeprägt. Auch die breite Ausbildung der Schulterprofilelemente aus dem Aufstandsbereich heraus bis hin zum axialen Ende des Schulterstreifens außerhalb des Aufstandsbereiches führt beim Ein- und Austreten dieser Elemente aus dem Berührkontakt mit der Straße zu verstärkten Schwingungen, die sich in Geräuschentwicklungen niederschlagen. Auch die Bodendruckverteilung ist ungleichmäßig, wodurch der Abrieb ebenso verungleichmäßigt wird.

Der Erfindung liegt die Aufgabe zugrunde, ein drehrichtungsungebundenes Laufstreifenprofil eines Fahrzeugreifens mit Blockprofilstruktur gemäß den Merkmalen des Oberbegriffs des Anspruchs 1 bei Beibehaltung deren Vorteile hinsichtlich der Aquaplaning- und Handlingeigenschaften sowie der Unempfindlichkeit gegenüber breiteren Längsrillen in Straßenoberflächen, weiter hinsichtlich der Geräuschentwicklung, der Abriebeigenschaften und der Sägezahnbildungen zu verbessern.

Erfindungsgemäß wird die Aufgabe durch eine Ausbildung gemäß den Merkmalen des Anspruchs 1 gelöst. Durch Ausbildung der schmalen Umfangsrille mit Tiefe ihres Rillengrundes, die maximal der Tiefe der breiten Umfangsrillen entspricht, wobei die Tiefe der Querrillen der zentralen Umfangsbänder in ihrem zur schmalen Umfangsrille weisenden axialen Endbereich von einer Tiefe, die im Bereich der Krümmung des Rillengrundes der breiten Umfangsrillen entspricht, kontinuierlich zur zentralen Umfangsrille hin ansteigt, werden die Profilelemente der zentralen Umfangsbänder in ihrem zur zentralen Umfangsrippe hinweisenden Bereich angebunden. Die Anbindung erfolgt dabei über die gesamten Eckbereiche der Profilelemente, in denen sich Querlamelle und schmale Umfangsrille jeweils treffen, und reicht sogar bis in den zur schmalen Umfangsrille hinweisenden Endbereich der Querrille. Die übliche Druckverteilung der Belastung eines PKW-Fahrzeugreifens, mit kontinuierlich vom Reifenzentrum nach axial außen abnehmender Druckverteilung stellt auch bei diesem Reifen die sichere Abführung des Wassers aus dem zentralen Bereich durch die Querrillen nach außen sicher.

Gleichzeitig nehmen die breiten außerhalb des Zentrums und somit außerhalb des maximalen Drucks angeordneten breiten Umfangsrillen Wasser auf. Die Querrillen der Schulterumfangsbänder führen Wasser weiter nach außen seitlich aus dem Reifenaufstandsbereich heraus. Optimale Aquaplaningeigenschaften bleiben somit uneingeschränkt aufrechterhalten.

Durch die bereits im Querrillenbereich beginnende und sich bis zum Übergang in die schmale Querrille erstreckende Anbindung mit kontinuierlich zunehmender Steifigkeit der Profilelemente der zentralen Umfangsbänder an die zentrale Umfangsrippe werden diese zusätzlich versteift. Sie bieten somit mehr Widerstand gegenüber Verbiegungen und Verwindungen. Sägezahneffekt und Vibrationen werden verstärkt vermieden. Abrieb wird reduziert, die Bodendruckverteilung vergleichmäßigt. Die Entkopplung der Schulter außerhalb des Aufstandsbereichs durch die entkoppelnde Umfangsrille reduziert das Auftreten von Geräuschen aufgrund von Schwingungen der außerhalb der Aufstandsfläche leicht schwingfähigen Schulterprofilelemente sowie Abriebsreduktion und Vergleichmäßigung im Schulterbereich. Entkopplung in der Schulter und Anbindung der Profilelemente der zentralen Umfangsreihen an die zentrale Umfangsrippe beginnend im Querrillenbereich reduzieren das Auftreten unerwünschter Geräusche. Zur noch steiferen Anbindung ist es vorteilhaft, die schmale Umfangsrille zumindest in ihren Umfangsabschnitten zwischen den Querrillen mit geringeren Tiefen auszubilden.

Ein Negativanteil an der gesamten Fläche von nur 10 bis 15 % im zentralen Mittenbereich ermöglicht eine vorteilhafte Reduzierung der Geräuschentstehung trotz guter Aquaplaningeigenschaften. Verstärkt wird die Aquaplaningoptimierung durch einen geringfügig höheren Negativanteil von 16 bis 20 % im Schulterbereich.

Durch Ausbildung einer zentralen Umfangsrille innerhalb der Umfangsrippe gemäß den Merkmalen von Anspruch 4 wird ein zusätzlicher Wasserspeicher im Zentrum des Profils geschaffen. Insbesondere bei PKW-Fahrzeugreifen mit geringeren Druckveränderungen in axialer Richtung im zentralen Laufflächenbereich werden die Aquaplaningeigenschaften hierdurch zusätzlich verbessert, wobei die Ausbildung der zentralen Umfangsrille eine noch schmalere Ausbildung der schmalen Umfangsrillen zwischen Umfangsrippe und zentralen Umfangsbänder und somit eine noch bessere Anbindung der Profilelemente der zentralen Umfangsbänder an die zentrale Umfangsrippe ermöglicht ohne dabei auf die kompakte Ausbildung des zentralen Laufstreifenbereichs zu verzichten.

Durch Ausbildung der zentralen Umfangsrippe mit parallelen Schräglamellen gemäß den Merkmalen von Anspruch 5 wird die hohe Biegesteifigkeit der zentralen Umfangsrippe geringfügig reduziert, wodurch jedoch die angebundenen Profilelemente Belastungen in größerem Umfang an die immer noch steife Umfangsrippe weiterleiten können. Die gegenläufig zu den benachbarten Querrillen gerichtete Ausbildung der parallelen Schräglamellen bewirkt durch ihre Gegenläufigkeit außerdem ebenso wie die gegenläufige Ausbildung der Querrillen der zentralen Umfangsbänder und der Schulterbänder eine Erhöhung der Quersteifigkeit der Laufstreifenprofilelemente und außerdem eine Verbesserung von Naßgriff und Schneetraktion und von Wintereigenschaften.

Zusätzliche Querlamellen, die sich über die gesamten Profilblockelemente der zentralen Umfangsbänder bzw. über die gesamte Breite der Schulterumfangsbänder erstrecken, bewirken durch ihre parallel zu den jeweiligen Querrillen ausgebildete Anordnung zusätzliche Griffkanten, die die Traktionseigenschaften der Profilblockkanten weiter verstärken. Durch die weite Erstreckung der Ausbildung der Querlamellen sowie durch deren parallele Anordnung zu den jeweiligen Querrillen, die zu den axial benachbarten Querrillen jeweils gegenläufig angeordnet sind, werden bei gleichmäßigem Abrieb über die gesamte Laufflächenbreite besonders hohe Traktionseigenschaften für Nässe und Schnee über die gesamte Breite der Lauffläche erzielt. Somit erhält der Fahrzeugreifen neben optimierten Sommer- auch gute Wintereigenschaften. Die gegenläufige Schräganordnung von Querrillen sowie von Schräglamellen sichern Quer- und Längstraktion. Um Vibrationen und Geräuschentwicklung zusätzlich zu reduzieren, ist es von Vorteil, die Querlamellen mit verändertem Einschnittiefenverlauf auszubilden, so daß am axialen Rand der Querlamellen die Einschnittiefe geringer ausgebildet ist als in dem dazwischen liegenden Hauptteil der Lamelle. Ein Schwingen der Profilelementkanten wird somit ohne Verlust der Fraktionseigenschaften zusätzlich reduziert. Der gebogene Verlauf der Querlamellen sowie deren zentrierte Anordnung erhöht die Blocksteifigkeit.

Durch Aufteilung der Profilelemente durch die Lamellen in Teile gleicher Umfangslängen werden Profilblockelementteile mit im wesentlichen gleichen Steifigkeiten erzielt. Hierdurch wird die Vibrationsgefahr, die bei ungleich lang ausgebildeten Profilblockteilen gegeben ist, minimiert.

Durch die Ausbildung von Entlüftungsrillen, die im wesentlichen in Umfangsrichtung ausgebildet sind, und sich durch jeweils einen Teil der durch eine Querlamelle in zwei gleiche Teile aufgeteilten Profilblockelemente der zentralen Umfangsbänder erstreckt und die somit die Querlamelle mit einer das Profilblockelement begrenzenden Querrille verbindet, wird die Gefahr von Lufteinschlüssen in den Querlamellen beim Abrollen des Reifens weitgehend vermieden. Die Luft, die beim Öffnen der Querlamelle in diese eindringt, kann beim Schließen der Querlamelle geräuschlos durch die (unverändert offene) Entlüftungsrille entweichen. Die Schubsteifigkeit des Profilblockelements wird durch die Ausbildung nur in einem Profilblockteil kaum beeinflußt.

Durch Aufteilung der Schulterblockelemente durch Querlamellen in Umfangselemente gleicher Länge wird eine gleichmäßigere Bodendruckverteilung in Schulter und durch Aufteilung der Profilblockelemente der zentralen Umfangsbänder in Teile gleicher Länge durch Querlamellen eine gleichmäßige Bodendruckverteilung auch im zentralen Mittenbereich erreicht, wodurch ungleichmäßigem Abrieb entgegengewirkt wird.

Durch Ausbildung einer sich über den Umfang erstreckenden, im wesentlichen in Umfangsrichtung ausgebildeten Entlüftungsrille noch innerhalb der Aufstandsfläche im Schulterumfangsband werden Lufteinschlüsse in den Querlamellen der Schulterumfangsbänder durch Ableitung über die Entlüftungsrille in die Querrillen vermieden. Schlagartige Entlüftung und dadurch bedingte, unerwünschte Geräuschentstehung werden vermieden.

Durch Ausbildung der Querrillen des Schulterumfangsbandes mit einem Verlauf, der kontinuierlich von der breiten Umfangsrille nach axial außen hin in Umfangsrichtung unter Abnahme der Steigung steigt und im axialen Randbereich der Aufstandsfläche nahezu parallel zur Achsrichtung verläuft, werden die für die Einleitung der Schubkräfte in das Laufstreifenprofil wichtigen Randbereiche der Aufstandsfläche genau im Bereich ihrer Einleitung bereits mit der optimalen Ableitungsrichtung - nämlich zur Mitte hin - ausgebildet. Hierdurch wird der Abrieb weiter optimiert.

Durch reduzierte Einschnittiefe der Schulterquerlamellen jeweils im axialen Randbereich zur breiten Umfangsrille, zur Entlüftungsrille und zur Entkopplungsrille und mit jeweils dazwischen befindlichen Bereichen mit durchgehend größerer Einschnittiefe werden breite Traktionskanten geschaffen, die aufgrund der breiten Erstreckung Flexibilität der Schulterblockelemente und somit eine hohe Wirksamkeit der Traktionskanten für Nässe und Schnee sicherstellen und durch Anbindung im Randbereich zu den Umfangsrillen Vibration und Geräuschentwicklung reduzieren. Handlingseigenschaften und Aquaplaningseigenschaften werden durch die erhöhte Blocksteifigkeit verbessert.

Die Erfindung wird im Folgenden anhand der in den Figuren 1 bis 6 dargestellten Ausführungsbeispiele näher erläutert. Hierin zeigen
- Fig. 1: abgewickeltes Laufstreifenprofil eines Fahrzeugluftreifens
- Fig. 2: Ausführungsbeispiel gemäß Figur 1 in vergrößerter Darstellung mit Darstellung der Anbindung der zentralen Umfangsreihen
- Fig. 3: Ausführungsbeispiel von Figur 2 in Querschnittsdarstellung eines Reifens
- Fig. 4: weiteres Ausführungsbeispiel der Erfindung mit geteilter, zentraler Umfangsrippe
- Fig. 5: vergrößerte Darstellung der Ausführung von Figur 4
- Fig. 6: Fahrzeugreifen in Querschnittsdarstellung gemäß dem Schnitt V-V von Figur 5.

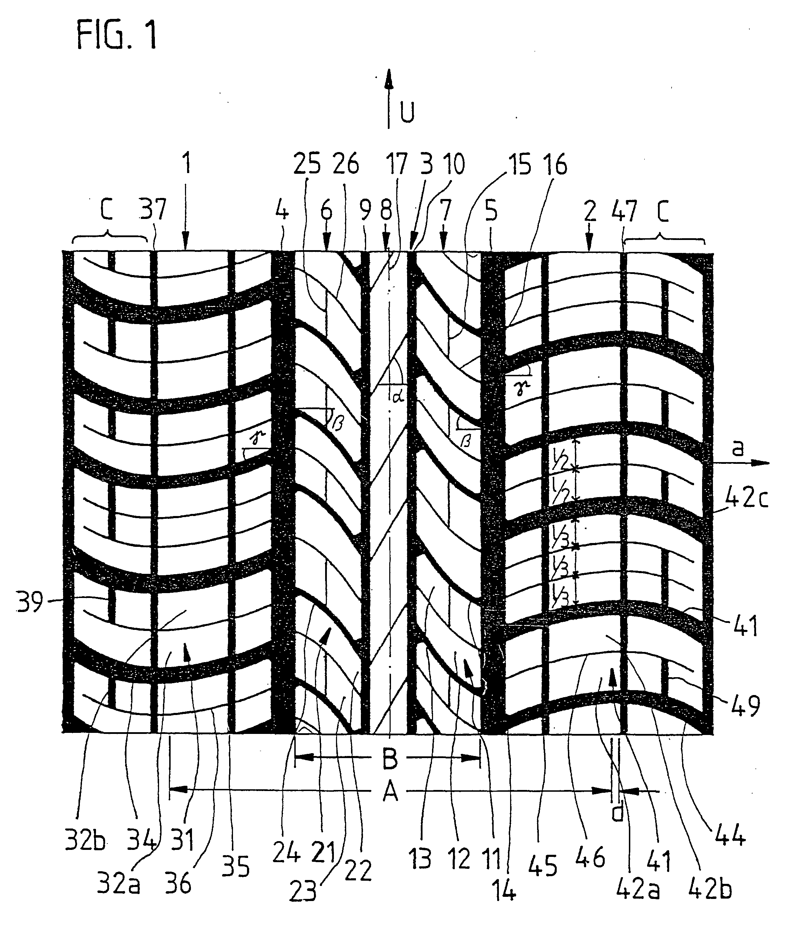

Die Figuren 1 bis 3 zeigen ein erfindungsgemäßes drehrichtungsungebundenes Laufstreifenprofil eines Fahrzeugluftreifens mit Schulterumfangsbändern 1 und 2, die jeweils aus in Umfangsrichtung hintereinander angeordneten wesensgleichen Profilblockelementen 31 bzw. 41 aufgebaut sind und durch Querrillen 34 bzw. 44 jeweils von einander getrennt sind. Zwischen den Schulterumfangsbändern 1 und 2 ist durch breite Umfangsrillen 4 und 5 von den Schulterumfangsbändern 1 und 2 getrennt der zentrale Umfangsbereich 3, bestehend aus 2 zentralen Umfangsbändern 6 und 7 mit jeweils über den Umfang verteilt angeordneten Profilblockelementen 21 bzw. 11 angeordnet, wobei die benachbarten Profilblockelemente 21 bzw. die benachbarten Profilblockelemente 11 jeweils voneinander durch eine Querrille 24 bzw. 14 voneinander getrennt sind. Im zentralen Bereich 3 ist zwischen den beiden zentralen Umfangsbändern 6 und 7 von diesen jeweils durch eine schmale Umfangsrille 9 und 10 getrennt angeordnet eine Umfangsrippe 8 ausgebildet. Die axiale Breite B des zentralen Bereichs 3 beträgt 40 bis 50 % der axialen Aufstandsbreite A, ist jedoch mindestens so groß gewählt, daß sie breiter als der Abstand der zur Wasserabfuhr in Straßen ausgebildeten Längsrillen von 1 Zoll (d.h. breiter als 25,4 mm) ist.

In Figur 1 ist die Umfangsrichtung u ebenso wie die Achsrichtung a des Fahrzeugrades jeweils mit einem Pfeil dargestellt.

Die zentrale Umfangsrippe 8 ist mit parallelen über den Umfang des Reifens verteilt angeordneten Schräglamellen 17 mit konstanter Steigung in Umfangsrichtung über die von links nach rechts weisende Achsrichtung unter Einschluß eines Steigungswinkels α ausgebildet. Die Querrillen 14 und 24 der zentralen Umfangsbänder 6 und 7 verlaufen mit negativer Steigung in Umfangsrichtung über der von links nach rechts laufenden Achsrichtung 9 unter einem Winkel β zur Achsrichtung. Der Winkel β ändert sich vom an die schmalen Umfangsrillen 7 und 9 angrenzenden Bereich der zentralen Umfangsbänder 6 und 7, wo er 50° bis 60°, bevorzugt 55°, beträgt, unter stetiger abnehmender Verkleinerung nach axial außen zur jeweils angrenzenden breiten Umfangsrille 4 bzw. 5, wo er einen Wert von 25 bis 40°, bevorzugt von 30°, erreicht. α nimmt Werte zwischen 50° und 70°, bevorzugt 60°, ein.

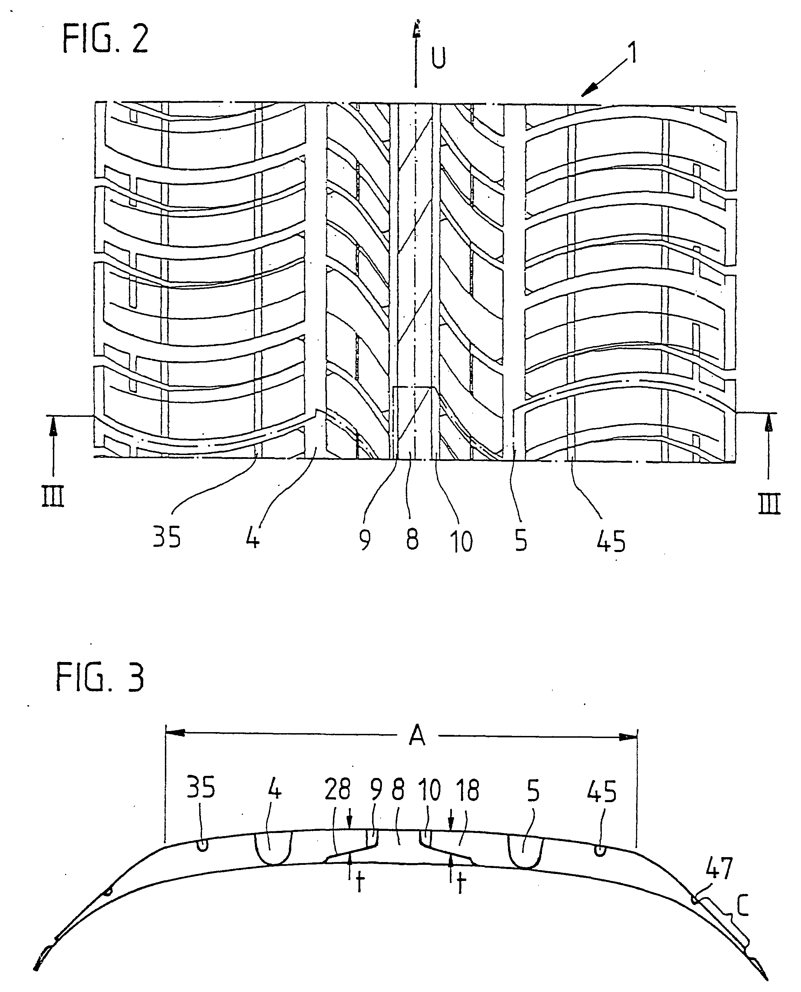

Das zwischen jeweils zwei benachbarten Querrillen 14 bzw. 15 eingeschlossene Profilblockelement 11 bzw. 21 ist jeweils durch eine das Profilblockelement 11 bzw. 21 in zwei Teilprofilblockelemente 12 bzw. 13 gleicher Umfangslänge aufteilende Querlamelle 16 bzw. 26 parallel zu den Querrillen 14 bzw. 24 des jeweiligen zentralen Umfangsbandes 6, 7 verlaufend ausgebildet. Querrillen 14, 24 sowie Querlamellen 26 bzw. 16 erstrecken sich über die gesamte axiale Breite des jeweiligen zentralen Umfangsbandes 6 bzw. 7. Wie in den Figuren 2 und 3 dargestellt ist, sind die breiten Umfangsrillen 4 und 5 mit ihrem Rillengrund deutlich tiefer ausgebildet als die schmalen Umfangsrillen 9 und 10. Die schmalen Umfangsrillen 9 und 10 weisen eine Tiefe von im wesentlichen 50 % der Tiefe der breiten Umfangsrillen 4 und 5 auf. Die die breiten Umfangsrillen 4 bzw. 5 mit den schmalen Umfangsrillen 9 bzw. 10 verbindenden Querrillen 14 bzw. 24 der zentralen Umfangsbänder 6 bzw. 7 verlaufen in ihrer Rillentiefe zunächst im wesentlichen in Tiefe der Rillentiefe der breiten Umfangsrillen 4 bzw. 5. Unmittelbar im Anschluß an die Hälfte ihrer axialen Erstreckung beginnt der Rillengrund nach axial innen kontinuierlich anzusteigen bis er beim Übergang in die schmalen Umfangsrillen 9 und 10 eine Tiefe von 50 % der Tiefe der breiten Umfangsrillen 4 und 5 erreicht hat. Die in diesem Bereich zur Umfangsrichtung spitzwinklig verlaufenden Profilblockelemente 11 bzw. 21 werden hierdurch in diesem durch den spitzen Verlauf besonders anfälligen Bereich für Vibration ungleichmäßigen Abrieb und Sägezahnbildung an die zentrale Umfangsrille 8 angebunden und versteift. In Fällen, in denen durch den zur schmalen Umfangsrille 4 bzw. 5 kontinuierlich ansteigenden Tiefenverlauf eine hinreichend steife Anbindung der schwingungsempfindlichen Bereiche der Profilblockelemente 11 bzw. 21 erzielt wird, ist es denkbar, die schmale Umfangsrille 9 bzw. 10 mit einer größeren Tiefe auszubilden, die maximal der Tiefe der breiten Umfangsrillen 4 bzw. 5 entspricht.

Die Lamellen 16 bzw. 26 sind, wie in den Darstellungen nicht zu erkennen ist, in ihren zu den benachbarten Umfangsrillen 4, 5, 9, 10 weisen den Endbereichen in ihrer Einschnittiefe hin kontinuierlich abnehmend ausgebildet, so daß die Teilprofilblockelemente 12, 13 bzw. 22 bzw. 23 eines jeden Profilblockelements 11 bzw. 21 in ihrem axialen Randbereich zu den benachbarten Umfangsrillen hin versteifend aneinander angebunden sind und dennoch Traktionskanten bilden. Zur Entlüftung der Querlamellen 26 bzw. 16 ist im axialen Mittenbereich jeweils eines Teilprofilblockelementes 13 bzw. 23 eines Profilblockelements eine in Umfangsrichtung verlaufende, schmale Entlüftungsrille 15 und 25 ausgebildet, deren Breite 88 % der Breite der schmalen Umfangsrillen 3 bzw. 9 beträgt. Die Entlüftungsrillen 15 und 25 der beiden zentralen Umfangsbänder 6 bzw. 7 sind dabei in spiegelbildlicher Anordnung zu den die Profilblockelemente teilenden Querlamelle 16 bzw. 26 ausgebildet, d.h. im zentralen Umfangsband 7 ist die Entlüftungsrille 15 in Umfangsrichtungs der zugehörigen Querlamelle 16 jeweils nachgeordnet und im Umfangsband 6 ist die Entlüftungsrille der zugehörigen Querlamelle 26 in Umfangsrichtung jeweils vorgeordnet ausgebildet.

Die Querrillen 34 bzw. 44 der Schulterumfangsreihen 1 bzw. 2 erstrecken sich in axialer Richtung jeweils von der angrenzenden breiten Umfangsrille 4 bzw. 5 nach axial außen über den gesamten Schulterbereich bis in den Schulterdekorbereich c hinaus und verlaufen unter einem Steigungswinkel γ zur Achsrichtung a, der im axialen Endbereich der Schulterumfangsreihen 1 und 2 zu den benachbarten breiten Umfangsrillen 4 und 5 ein Maximum von 15 bis 25°, bevorzugt 20° aufweist und unter kontinuierlicher Abnahme der Steigung in Umfangsrichtung über die Achsrichtung nach axial außen zum Dekorbereich hin stetig abnimmt, wobei die Steigung der Querrille 36 bis 46 und somit der Winkel γ im axialen Randbereich der Aufstandsbreite A im wesentlichen 0° beträgt und unter weiterer stetiger kontinuierlicher Abnahme der Steigung bis in den Dekorbereich c der Winkel γ als Maß für die Steigung der Querrille 44 bzw. 34 in Umfangsrichtung über die Achsrichtung sogar negative Werte annimmt.

In einem Abstand d von 5 bis 15 %, beispielsweise 9 %, der axialen Aufstandsfläche A ist eine über den Umfang des Fahrzeugluftreifens sich erstreckende Umfangsrille 47 zur Entkopplung des Schulterdekorbereichs c vom restlichen Schulterbereich ausgebildet.

Die Profilblockelemente 31 bzw. 41 der Schulterumfangsbänder 1 bzw. 2 sind jeweils durch eine oder zwei ein jedes Profilblockelement 31 bzw. 41 in zwei bzw. drei Teilblockelementen 32 a, b, c bzw. 42 a, b, c so aufgeteilt, daß die Teilblockelemente eines jeden Profilblockelements jeweils gleiche Umfangslängen aufweisen. Die Querlamellen 36 bzw. 46 erstrecken sich von den breiten Umfangsrillen 4 und 5 über den gesamten Aufstandsflächenbereich A nach außen über die Entkopplungsrille 47 hinweg bis in den Dekorbereich c hinein und sind jeweils parallel zu den Querrillen 34 bzw. 44 des jeweiligen Schulterumfangsbands 1 bzw. 2 ausgebildet.

Im Dekorbereich c ist jeweils eine Entlüftungsrille 39 bzw. 49 in Umfangsrichtung ausgebildet, die jeweils eine Querrille 44 bzw. 43 mit den Querlamellen 45 bzw. 35 eines Profilblockelementes 31 bzw. 41 verbindet. Im Schulterumfangsband 1 sind die Entlüftungsrillen in Umfangsrichtung den Querlamellen nachgeordnet und im Umfangsband 2 sind die Entlüftungsrillen 49 den zugehörigen Querlamellen 46 vorgeordnet ausgebildet. Die Lage dieser Entlüftungsrillen ist somit jeweils gegenüber den Entlüftungsrillen 25 bzw. 15 des angrenzenden zentralen Umfangsbandes 6 bzw. 7 gegenüber den dort ausgebildeten Querlamellen 16 bzw. 26 invertiert.

Wie in Figur 3 zu erkennen ist, sind die Entlüftungsrillen 35 bzw. 45 schmaler oder gleich breit wie die schmalen Umfangsrillen 9 und 10 und mit einer Tiefe von maximal 50 % der Tiefe der breiten Umfangsrillen 4, 5 ausgebildet. Die Entkopplungsrille 47 ist mit einer Tiefe von 50 % der Tiefe der Entlüftungsrillen 35 und mit einer Breite, die der Breite der Entlüftungsrillen entspricht, ausgebildet.

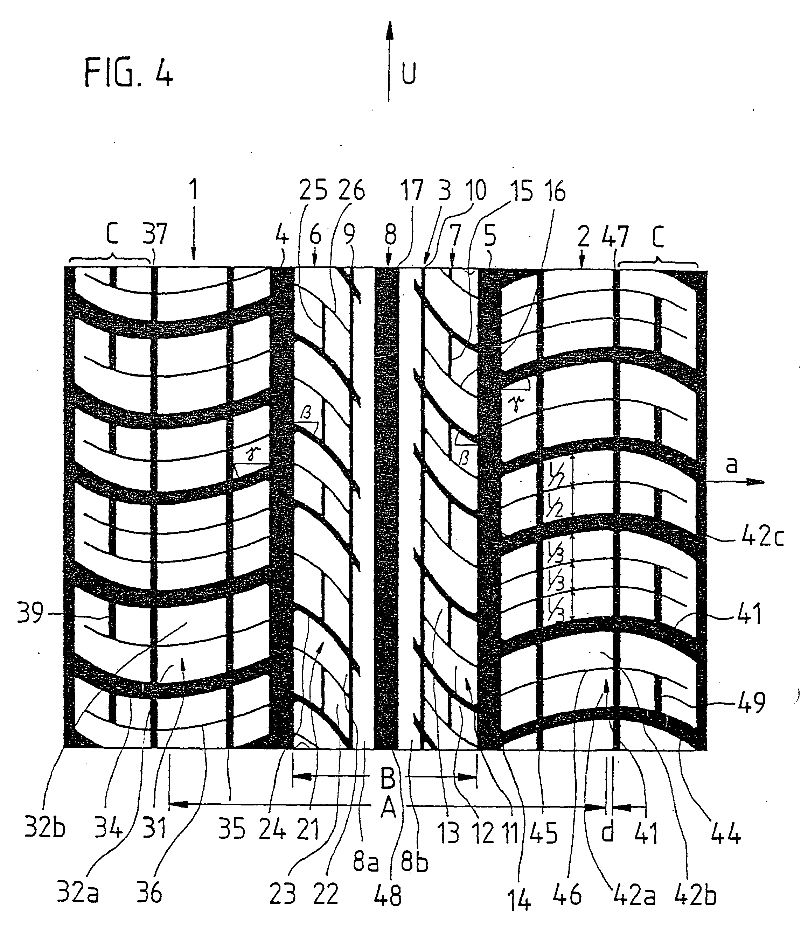

Es ist auch denkbar, wie in den Figuren 4 bis 6 dargestellt ist, die zentrale Rippe 8 zwischen den schmalen Umfangsrillen 9 und 10 durch eine breite Umfangsrille 48 in zwei Umfangsrippen 8a und 8b gleicher Breite aufzuteilen. Hierdurch kann auf nassen Straßen, insbesondere bei Fahrzeugreifen mit einer Krümmung, die nur einen geringen Druckgradienten in axialer Richtung im zentralen Bereich ermöglicht, eine zusätzliche Wasseraufnahme ermöglicht werden. Die Breite der zentralen Umfangsrille 48 entspricht der Breite der breiten Umfangsrillen 4 und 5. Wie in den Figuren 4 bis 6 zu erkennen ist, ist es denkbar, die Querrillen 14 bzw. 24 so auszubilden, daß sie sich in den äußeren axialen Bereich der Umfangsrippe 8 erstrecken, wobei die axiale Erstreckung kleiner 30 % der Summe der axialen Breiten der Umfangsrippenteile 8a und 8b entspricht. Eine derartige Erstreckung ist auch im Ausführungsbeispiel von Figur 1 denkbar.

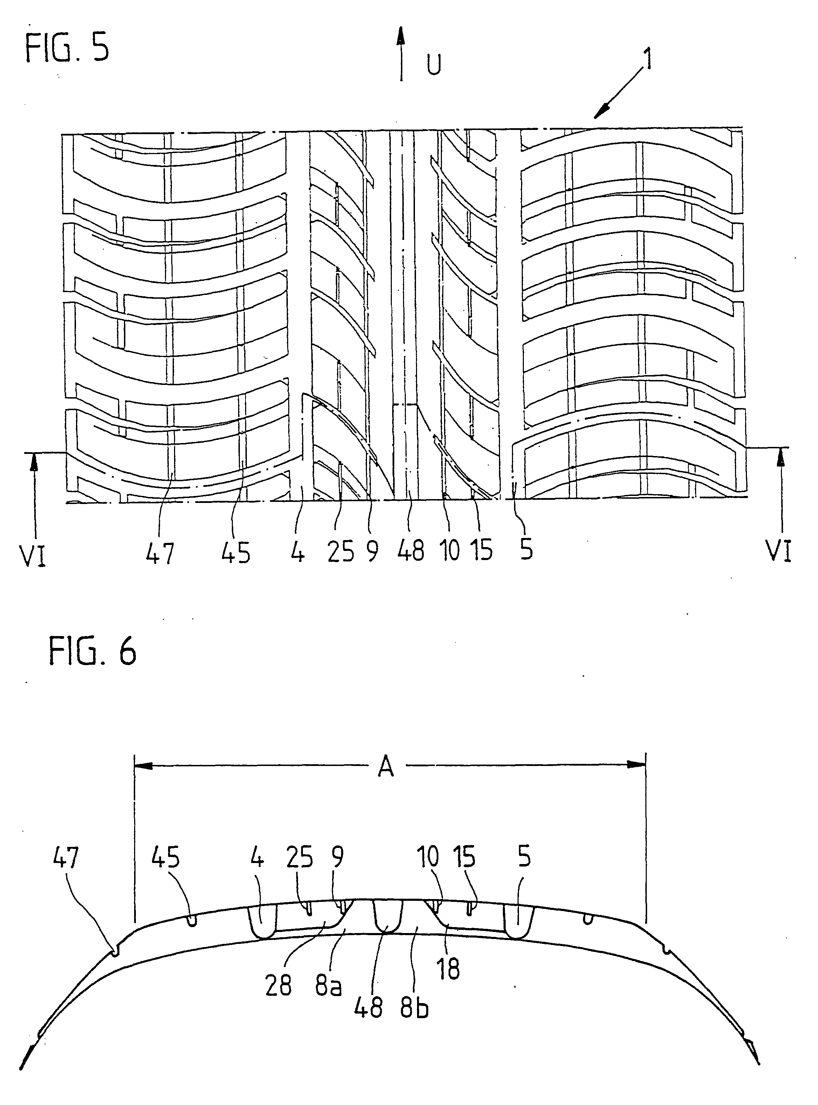

Wie in Figur 6 dargestellt ist, beginnt der Rillengrund der Querrillen 14 bzw. 24 in der Tiefe des Übergangs des Krümmungsradius R der Krümmung der breiten Umfangsrille 4 bzw. 5 in den schrägen Seitenwandverlauf der breiten Umfangsrille 4 bzw. 5. In axialer Richtung nach innen zu den schmalen Umfangsrillen 9 und 10 behalten die Querrillen 18 bzw. 28 diese Tiefe über eine Breite von 80 bis 85 % der axialen Breite der zentralen Umfangsbänder 6 bzw. 7 bei, um erst in den letzten 15 bis 20 % der axialen Breite der zentralen Umfangsbänder 6 bzw. 7 kontinuierlich anzusteigen, so daß sie im zentralen Übergangsbereich zu den schmalen Umfangsrillen 9 bzw. 10 eine Tiefe t aufweisen, die der Tiefe der schmalen Umfangsrille 9 bzw. 10 entspricht.

Wie am Beispiel von Figur 6 zu entnehmen ist, ist die Entlüftungsrille 15 bzw. 25 mit 90 % der Breite der schmalen Umfangsrillen 9 bzw. 10 ausgebildet. Die schmale Umfangsrille 9 bzw. 10 ist mit einer Breite von 50 % der Entlüftungs- und Entkopplungsrillen 45 bzw. 47 ausgebildet.

Die schmalen Umfangsrillen 9 bzw. 10 beider Ausführungsbeispiele von Fig. 1 und Fig. 4 sind mit einer Breite von 10 bis 40 % der Breite der breiten Umfangsrillen 4, 5, 7 ausgebildet. Beispielsweise sind die schmalen Umfangsrillen 9, 10 von Fig. 1 mit einer Breite von 37 % und von Fig. 4 mit einer Breite von 14 % der Breite der breiten Umfangsrillen 4, 5, ausgebildet.

Die Breite der breiten Umfangsrillen 4, 5 beträgt 5 bis 6 %, beispielsweise 5, 7 % der Breite der Aufstandsfläche der Konturlaufflächenbreite im unbelasteten Zustand.

Wie den Figuren 1 und 4 zu entnehmen ist, sind die Schulterprofilblockelemente 41 bzw. 31 zu den benachbarten Profilblockelementen 11 und 21 der zentralen Umfangsbänder 6 und 7 in Umfangsrichtung gesehen zur Geräuschreduktion versetzt angeordnet. Ebenso sind die Profilblockelemente 11 bzw. 21 der zentralen Umfangsbänder 6 bzw. 7 zueinander in Umfangsrichtung versetzt angeordnet.

Im zentralen Bereich beträgt der Negativanteil an der gesamten Fläche 12 %, im Bereich der Schulter 18 %.

### Bezugszeichenliste

- 1: Schulterumfangsband
- 2: Schulterumfangsband
- 3: Zentraler Bereich
- 4: Breite Umfangsrille
- 5: Breite Umfangsrille
- 6: Zentrales Umfangsband
- 7: Zentrales Umfangsband
- 8: Umfangsrippe
- 9: Schmale Umfangsrille
- 10: Schmale Umfangsrille
- 11: Profilblockelement
- 12: Teilprofilblockelement
- 13: Teilprofilblockelement
- 14: Querrille
- 15: Entlüftungsrille
- 16: Querlamelle
- 17: Schräglamelle
- 18: Rillengrund
- 19 20 21: Profilblockelement
- 22: Teilprofilblockelement
- 23: Teilprofilblockelement
- 24: Querrille
- 25: Entlüftungsrille
- 26: Querlamelle
- 27 28: Rillengrund
- 29 30 31: Profilblockelement
- 32a, b, c: Teilblockelement
- 33 34: Querrille
- 35: Entlüftungsrille
- 36: Querlamelle
- 37: Entkopplungsrille
- 38 39: Entlüftungsrille
- 40 41: Profilblockelement
- 42a, b, c: Teilblockelement
- 43 44: Querrille
- 45: Entlüftungsrille
- 46: Querlamelle
- 47: Entkopplungsrille
- 48: Umfangsrille
- 49: Entlüftungsrille

## Patentansprüche

1. Drehrichtungsungebundenes Laufstreifenprofil eines Fahrzeugreifens mit Blockprofilstruktur
- mit zwei zentralen Umfangsbändern (6, 7) von über den Umfang hintereinander verteilt angeordneten Profilblockelementen (11, 21) und mit dazwischen benachbart angeordneter, durch schmale Umfangsrillen (9, 10) von diesen Umfangsbändern (6, 7) getrennter zentraler Umfangsrippe (8),
- mit zwei Schulterumfangsbändern (1, 2) mit über den Umfang verteilt angeordneten Profilblockelementen (31, 41), von denen je eines benachbart zu einer der beiden zentralen Umfangsbänder (6, 7) angeordnet und von dieser jeweils durch eine breite Umfangsrille (4, 5) getrennt ist,
- wobei die Profilblockelemente (11, 21, 31, 41) aller Umfangsbänder (6, 7, 1, 2) jeweils von den benachbarten Profilblockelementen des gleichen Umfangsbandes durch eine sich über die gesamte Breite des jeweiligen Umfangsbandes erstreckende Querrille (14, 24, 34, 44) getrennt sind, wobei diese Querrillen (14, 24, 34, 44) innerhalb eines Umfangsbandes jeweils parallel zueinander in axialer Richtung mit stetiger Steigung in Umfangsrichtung verlaufen, wobei die Umfangsrichtungskomponente der Querrillen (14, 24) der zentralen Umfangsbänder (6, 7) keinen Wendepunkt erfährt und im Bereich der trennenden, breiten Umfangsrillen (4, 5) der Steigungsverlauf der axial benachbarten Querrillen (14, 44; 24, 34) unter unstetiger Richtungsänderung der Umfangskomponente invertiert,
**dadurch gekennzeichnet,**
- **daß** der Rillengrund der schmalen Umfangsrille (9, 10) über den gesamten Umfangsverlauf der schmalen Umfangsrille maximal in der Tiefe des Rillengrundes der breiten Umfangsrille (4, 5) ausgebildet ist,
- wobei die Querrillen (14, 24) der zentralen Umfangsbänder (6, 7) in dem zur schmalen Umfangsrille (9, 10) weisenden axialen Endbereich der Querrillen (14, 24), welcher maximal 50 %, insbesondere 15 bis 35 % der axialen Erstreckung der Querrille (14, 24) beträgt, in ihrem Tiefenverlauf von einer Tiefe, die der Tiefe der breiten Umfangsrillen (4, 5) entspricht, kontinuierlich zur schmalen Umfangsrille (9) hin ansteigen.

2. Drehrichtungsungebundenes Laufstreifenprofil gemäß den Merkmalen von Anspruch 1,
- wobei zumindest in einem der beiden Schulterumfangsbänder (1, 2) axial außerhalb der Aufstandsfläche (A) eine der Profilblockelemente (31, 41) des Schulterumfangsbandes (1, 2) entkoppelnde Umfangsrille (37; 47) ausgebildet ist.

3. Drehrichtungsungebundenes Laufstreifenprofil gemäß den Merkmalen von Anspruch 1,
- mit einem Negativanteil der Fläche an der gesamten Fläche im aus zwischen den breiten Umfangsrillen (4, 5) ausgebildeten zentralen Mittenbereich (B) von 10 bis 15 % und im Schulterumfangsband insbesondere von 16 bis 20 %.

4. Drehrichtungsungebundenes Laufstreifenprofil gemäß den Merkmalen von Anspruch 3,
- wobei die zentrale Umfangsrippe (8) durch eine weitere zentrale, breite Umfangsrille (48) in zwei Umfangsrippen (8a, 8b) unterteilt wird, wobei die Breite dieser Umfangsrille (48), insbesondere im wesentlichen der Breite der zwischen den zentralen Umfangsbändern (6, 7) und den Schulterbändern (1, 2) angeordneten breiten Umfangsrillen (4, 5) entspricht, die bevorzugt mit einer Breite von 10 bis 20 % der Breite des zentralen Bereichs (B) ausgebildet sind, wobei die Breite der schmalen Umfangsrillen (9, 10) bevorzugt mit 10 bis 20 %, insbesondere mit 14 % der breiten Umfangsrillen (4, 5) ausgebildet ist.

5. Drehrichtungsungebundenes Laufstreifenprofil gemäß den Merkmalen von Anspruch 1,
- wobei die zentrale Umfangsrippe (8) mit parallelen Schräglamellen (17), insbesondere konstanter Steigung mit einem dem in den beiden benachbarten zentralen Umfangsbändern (6, 7) ausgebildeten Querrillen (14, 24) entgegengesetzten Steigungsverlauf ausgebildet sind.

6. Drehrichtungsungebundenes Laufstreifenprofil gemäß den Merkmalen von Anspruch 1,
- wobei parallel zu den Querrillen (14, 24) der zentralen Umfangsbänder (6, 7) in den Profilblockelementen (11, 21) dieser Umfangsbänder (6, 7) jeweils über die axiale Breite des jeweiligen zentralen Umfangsbandes (6, 7) erstreckend eine das Profilblockelement (11, 21) in zwei Teile (22, 23; 12, 13) gleicher Umfangslängen teilende Querlamelle ausgebildet ist.

7. Drehrichtungsungebundenes Laufstreifenprofil gemäß den Merkmalen von Anspruch 6,
- mit in jeweils einem (13, 23) der beiden Teile (13, 12; 23, 22) des Profilblockelements (11, 21) im wesentlichen in Umfangsrichtung ausgebildeter, die an diesen Teil angrenzende Querrille (14, 24) und die Querlamelle (16, 26) verbindender Entlüftungsrille (14, 25).

8. Drehrichtungsungebundenes Laufstreifenprofil gemäß den Merkmalen von Anspruch 1,
- mit parallel zu der Querrille (34, 44) zumindest eines Schulterbandes (1, 2) ausgebildeten sich im wesentlichen über die gesamte Breite des Schulterbandes (1, 2) bis in den Dekorbereich erstreckenden, die einzelnen Schulterprofilblockelemente (31, 41) jeweils in Teile gleicher Umfangslänge teilenden Querlamellen (36, 46).

9. Drehrichtungsungebundenes Laufstreifenprofil gemäß den Merkmalen von Anspruch 8,
- mit einer als Umfangsrille ausgebildeten Entlüftungsrille (35, 45) im Schulterumfangsband (1, 2) im axialen Bereich der Aufstandsfläche (A).

10. Drehrichtungsungebundenes Laufstreifenprofil gemäß den Merkmalen von einem oder mehreren der Ansprüche 1 bis 9,
- wobei die Querrillen (34, 44) des Schulterumfangsbandes (1, 2) im axialen Randbereich der Aufstandsfläche (A) im wesentlichen parallel zur Achsrichtung verlaufen.

11. Drehrichtungsungebundenes Laufstreifenprofil gemäß den Merikmalen von Anspruch 1,
- wobei der Rillengrund der breiten Umfangsrille (4, 5) im Querschnitt mit einem gekrümmten Bereich ausgebildet ist,
- wobei der Rillengrund der schmalen Umfangsrille (9, 10) über den gesamten Umfangsverlauf der schmalen Umfangsrille (9, 10) maximal mit der Tiefe des gekrümmten Bereichs des Rillengrundes der breiten Umfangsrille (4, 5) ausgebildet ist.

## Claims

1. Tread strip profile, which is not adapted to the direction of rotation, for a vehicle tyre having a block profile structure, said profile
- having two central circumferential strips (6, 7) of profile block elements (11, 21), which are distributed over the circumference behind one another, and having a central circumferential rib (8), which is disposed therebetween and adjacent thereto and is separated from these circumferential strips (6, 7) by narrow circumferential grooves (9, 10),
- having two circumferential shoulder strips (1, 2) with profile block elements (31, 41) distributed over the circumference, each of said profile block elements being disposed adjacent one of the two central circumferential strips (6, 7) and being separated from said strips by a narrow circumferential groove (4, 5),
- the profile block elements (11, 21, 31, 41) of all of the circumferential strips (6, 7, 1, 2) being each separated from the respective adjacent profile block elements of the same circumferential strip by a transverse groove (14, 24, 34, 44), which extends over the entire width of the respective circumferential strip, these transverse grooves (14, 24, 34, 44) within one circumferential strip extending respectively parallel to one another in the axial direction with a constant pitch in the circumferential direction, the circumferential direction component of the transverse grooves (14, 24) of the central circumferential strips (6, 7) having no turning point and, in the region of the separating, wide circumferential grooves (4, 5), the pitch configuration of the axially adjacent transverse grooves (14, 44; 24, 34) inverting with the variable change in direction of the circumferential component,
**characterised in that**
- the groove base of the narrow circumferential groove (9, 10) over the entire circumferential configuration of the narrow circumferential groove is at its maximum in the depth of the groove base of the wide circumferential groove (4, 5),
- the transverse grooves (14, 24) of the central circumferential strips (6, 7) in the axial end region of the transverse grooves (14, 24) ascending continuously towards the narrow circumferential groove (9), which end region extends towards the narrow circumferential groove (9, 10) and is a maximum of 50 %, more especially between 15 and 35 %, of the axial extension of the transverse groove (14, 24), in respect of their depth configuration from a depth which corresponds to the depth of the wide circumferential grooves (4, 5).

2. Tread strip profile, which is not adapted to the direction of rotation, according to the features of claim 1,
- wherein a circumferential groove (37; 47), which isolates the profile block elements (31, 41) of the circumferential shoulder strip (1, 2), is provided at least in one of the two circumferential shoulder strips (1, 2) axially externally of the contact surface (A).

3. Tread strip profile, which is not adapted to the direction of rotation, according to the features of claim 1,
- having a negative proportion of the surface in the entire surface in the central region (B), provided between the wide circumferential grooves (4, 5), of 10 to 15 % and in the circumferential shoulder strip more especially of 16 to 20 %.

4. Tread strip profile, which is not adapted to the direction of rotation, according to the features of claim 3,
- wherein the central circumferential rib (8) is divided into two circumferential ribs (8a, 8b) by an additional central, wide circumferential groove (48), the width of this circumferential groove (48) more especially corresponding substantially to the width of the wide circumferential grooves (4, 5), which are disposed between the central circumferential strips (6, 7) and the shoulder strips (1, 2) and are preferably provided with a width of 10 to 20 % of the width of the central region (B), the width of the narrow circumferential grooves (9, 10) preferably being 10 to 20 %, more especially 14 %, of the wide circumferential grooves (4, 5).

5. Tread strip profile, which is not adapted to the direction of rotation, according to the features of claim 1,
- wherein the central circumferential rib (8), having parallel inclined lamellae (17), more especially of a constant pitch, are provided with a pitch configuration opposed to that of the transverse grooves (14, 24) provided in the two adjacent central circumferential strips (6, 7).

6. Tread strip profile, which is not adapted to the direction of rotation, according to the features of claim 1,
- wherein a transverse lamella, which divides the profile block element (11, 21) into two parts (22, 23; 12, 13) of identical circumferential lengths, is provided respectively over the axial width of each respective central circumferential strip (6, 7) so as to extend parallel to the transverse grooves (14, 24) of the central circumferential strips (6, 7) in the profile block elements (11, 21) of these circumferential strips (6, 7).

7. Tread strip profile, which is not adapted to the direction of rotation, according to the features of claim 6,
- having an air-release groove (14, 25), which is provided in one respective part (13, 23) of the two parts (13, 12; 23, 22) of the profile block element (11, 21) substantially in the circumferential direction, and which connects the transverse groove (14, 24), abutting this part, and the transverse lamella (16, 26).

8. Tread strip profile, which is not adapted to the direction of rotation, according to the features of claim 1,
- having transverse lamellae (36, 46), which are provided parallel to the transverse groove (34, 44) of at least one shoulder strip (1, 2) and extend substantially over the entire width of the shoulder strip (1, 2) as far as the trim region, said lamellae dividing the individual shoulder profile block elements (31, 41) into respective parts of identical circumferential length.

9. Tread strip profile, which is not adapted to the direction of rotation, according to the features of claim 8,
- having an air-release groove (35, 45), in the form of a circumferential groove, in the circumferential shoulder strip (1, 2) in the axial region of the contact surface (A).

10. Tread strip profile, which is not adapted to the direction of rotation, according to the features of one or more of claims 1 to 9,
- wherein the transverse grooves (34, 44) of the circumferential shoulder strip (1, 2) in the axial edge region of the contact surface (A) extend substantially parallel to the axial direction.

11. Tread strip profile, which is not adapted to the direction of rotation, according to the features of claim 1,
- wherein the groove base of the wide circumferential groove (4, 5) has a cross-section with a curved region, and
- wherein the groove base of the narrow circumferential groove (9, 10) over the entire circumferential configuration of the narrow circumferential groove (9, 10) is at its maximum with the depth of the curved region of the groove base of the wide circumferential groove (4, 5).

## Revendications

1. Profil de bande de roulement non lié au sens de rotation d'un pneu de véhicule à structure de profil contenant des blocs, comprenant :
- deux bandes circonférentielles centrales (6, 7) d'éléments-blocs de profils (11, 21) disposés en étant répartis l'un derrière l'autre sur la circonférence et une nervure circonférentielle centrale (8) séparée de ces bandes circonférentielles (6, 7) par des rainures circonférentielle étroites (9, 10), disposée en étant adjacente entre ces bandes circonférentielles,
- deux bandes circonférentielles d'épaulement (1, 2) comprenant des éléments-blocs de profil (31, 41) disposés en étant répartis sur la circonférence, éléments-blocs de profil dont un élément est disposé à chaque fois en étant adjacent à l'une des deux bandes circonférentielles centrales (6, 7) et séparé de cette bande circonférentielle centrale par une rainure circonférentielle large (4, 5),
- où les éléments-blocs de profil (11, 21, 31, 41) de toutes les bandes circonférentielles (6, 7, 1, 2) sont à chaque fois séparés des éléments-blocs de profil adjacents de la même bande circonférentielle par une rainure transversale (14, 24, 34, 44) s'étendant sur toute la largeur de la bande circonférentielle respective, où ces rainures transversales (14, 24, 34, 44) à l'intérieur d'une bande circonférentielle s'étendent dans la direction circonférentielle en ayant une pente constante et en étant à chaque fois parallèles entre elles dans la direction axiale, où la composante, en direction circonférentielle, des rainures transversales (14, 24) des bandes circonférentielles centrales (6, 7) ne subit aucun point d'inflexion et, dans la zone des rainures circonférentielles larges de séparation (4, 5), l'allure de la pente des rainures transversales adjacentes axialement (14, 44 ; 24, 34) est inversée par une modification de direction non constante de la composante circonférentielle,
**caractérisé**
- **en ce que** le fond de la rainure circonférentielle étroite (9, 10) est configuré en étant maximal dans la profondeur du fond de la rainure circonférentielle large (4, 5), sur toute l'étendue circonférentielle de la rainure circonférentielle étroite,
- où les rainures transversales (14, 24) des bandes circonférentielles centrales (6, 7), dans la zone d'extrémité axiale des rainures transversales (14, 24), tournée vers la rainure circonférentielle étroite (9, 10), zone d'extrémité qui est au maximum à 50 %, notamment entre 15 % et 35 % de l'étendue axiale de la rainure transversale (14, 24), partent dans leur allure en profondeur, d'une profondeur qui correspond à la profondeur des rainures circonférentielles larges (4, 5), et montent en continu en direction de la rainure circonférentielle étroite (9).

2. Profil de bande de roulement non lié au sens de rotation selon les mentions de la revendication 1,
- où une rainure circonférentielle (37 ; 47) découplant un des éléments-blocs de profil (31, 41) de la bande circonférentielle d'épaulement (1, 2) est configurée axialement à l'extérieur de la surface de contact (A), dans au moins une des deux bandes circonférentielles d'épaulement (1, 2).

3. Profil de bande roulement non lié au sens de rotation selon les mentions de la revendication 1, comprenant :
- une partie négative de la surface sur la totalité de la surface dans la zone médiane centrale (B) formée entre les rainures circonférentielles larges (4, 5), variant entre 10 % et 15 % et variant notamment entre 16 % et 20 % dans la bande circonférentielle d'épaulement.

4. Profil de bande de roulement non lié au sens de rotation selon les mentions de la revendication 3,
- où la nervure circonférentielle centrale (8) est divisée en deux nervures circonférentielles (8a, 8b) par une autre rainure circonférentielle (48) large et centrale, où la largeur de cette rainure circonférentielle (48), correspond en particulier pratiquement à la largeur des rainures circonférentielles larges (4, 5) disposées entre les bandes circonférentielles centrales (6, 7) et les bandes d'épaulement (1, 2), lesquelles rainures circonférentielles sont formées en ayant de préférence une largeur comprise entre 10 % et 20 % de la largeur de la zone centrale (B), où la largeur des rainures circonférentielles étroites (9, 10) est constituée de préférence de 10 % à 20 %, en particulier de 14 % des rainures circonférentielles larges (4, 5).

5. Profil de bande de roulement non lié au sens de rotation selon les mentions de la revendication 1,
- où la nervure circonférentielle centrale (8) comprenant des lamelles obliques parallèles (17), notamment de pente constante, est configurée en ayant une allure de pente opposée à celle des rainures transversales formées (14, 24) dans les deux bandes circonférentielles centrales adjacentes (6, 7).

6. Profil de bande de roulement non lié au sens de rotation selon les mentions de la revendication 1,
- où, parallèlement aux rainures transversales (14, 24) des bandes circonférentielles centrales (6, 7), dans les éléments-blocs de profil (11, 21) de ces bandes circonférentielles (6, 7), une lamelle transversale divisant l'élément-bloc de profil (11, 21) en deux parties (22, 23 ; 12, 13) de même longueur circonférentielle est configurée en s'étendant à chaque fois sur la largeur axiale de la bande circonférentielle centrale respective (6, 7).

7. Profil de bande de roulement non lié au sens de rotation selon les mentions de la revendication 6, comprenant :
- dans respectivement une (13, 23) des deux parties (13, 12 ; 23, 22) de l'élément-bloc de profil (11, 21), une rainure d'évacuation (14, 25) reliant la rainure transversale (14, 24) contiguë à cette partie et la lamelle transversale (16, 26), la rainure d'évacuation étant formée pratiquement dans la direction circonférentielle.

8. Profil de bande de roulement non lié au sens de rotation selon les mentions de la revendication 1, comprenant :
- des lamelles transversales (36, 46) divisant les différents éléments-blocs de profil d'épaulement (31, 41) à chaque fois en parties de même longueur circonférentielle, s'étendant pratiquement sur toute la largeur de la bande d'épaulement (1, 2) jusque dans la zone de décoration, configurées parallèlement à la rainure transversale (34, 44) au moins d'une bande d'épaulement (1, 2).

9. Profil de bande de roulement non lié au sens de rotation selon les mentions de la revendication 8, comprenant :
- une rainure d'évacuation (35, 45) configurée comme une rainure circonférentielle dans la bande circonférentielle d'épaulement (1, 2) dans la zone axiale de la surface de contact (A).

10. Profil de bande de roulement non lié au sens de rotation selon les mentions de l'une ou de plusieurs des revendications 1 à 9,
- où les rainures transversales (34, 44) de la bande circonférentielle d'épaulement (1, 2), dans la zone latérale axiale de la surface de contact (A), s'étendent pratiquement de façon parallèle à la direction axiale.

11. Profil de bande de roulement non lié au sens de rotation selon les mentions de la revendication 1,
- où le fond de la rainure de la rainure circonférentielle large (4, 5) est configuré, en coupe transversale, en ayant une zone recourbée,
- où le fond de la rainure circonférentielle étroite (9, 10) est configuré au maximum avec la profondeur de la zone recourbée du fond de la rainure circonférentielle large (4, 5), sur la totalité de la circonférence de la rainure circonférentielle étroite (9, 10).
